# EUROPEAN PATENT APPLICATION

(11) **EP 1 494 043 A2**
(43) Date of publication of application: **05.01.2005**
(21) Application number: 04103096.6
(22) Date of filing: 30.06.2004
(51) Int. Cl.: G01S 7/292, G01S 13/93

(54) **Short-range vehicular radar system**

(30) Priority: 02.07.2003 US 612741
(71) Applicant: M/A-COM, INC., Lowell, MA 01853 (US)
(72) Inventor: LABITT, Bruce David, Nashua, New Hampshire 03064 (US); PARADIE, Michael John, Nashua, New Hampshire 03063 (US); MARPLE, Matthew Douglas, Pepperell, Massachusetts 01463 (US)
(74) Representative: Hornung, Jan, Dr.

(57) **Abstract**

Short-range vehicular radar systems are described. In one implementation, an apparatus used in radar applications includes a programmable digital receiver (114) having an adaptable interference filter (216, 218) that is configured to reject radar pulses received from another radar system. In another implementation, a short-range vehicular radar system includes receive and transmission antennae (116(1), 116(2)), a programmable delay generator (201), and programmable receiver (114). The programmable delay generator (201) is configured to control transmission of pulses from the transmission antenna (116(2)) at randomly selected times to prevent ambiguities associated with target objects that are distances away from the transmission antenna (116(2)) that are greater than the speed of light times the pulse repetition rate divided by two. The programmable receiver (114) is calibrated to sample signals received by the receive antenna (116(1)) relative to when the pulses are emitted from the transmission antenna (116(2)).

## Description

### TECHNICAL FIELD

The present invention relates generally to radar systems, and more particularly, to short-range vehicular radar systems.

### BACKGROUND

Increasingly motor vehicles are being deployed with radar systems to perform various safety applications. For instance, radar systems may be used as a back-up warning system to warn a driver when his vehicle is about to back into an object. Other applications may include warning a driver when another vehicle is in a region known as the vehicle's "blind-spot," which is the region on either side of the driver's vehicle, but outside the visible scope of the vehicle's mirrors. Another application may include crash avoidance systems that warn a driver when the vehicle is too close to another vehicle or control the vehicle's speed in relation to other vehicles, such as when the vehicle is operating in a cruise control mode.

To meet the demands of these varied applications, many radar system manufacturers are attempting to design and build radar systems that are inexpensive enough to function in this environment, but also function reliably. Many manufacturers are finding it difficult, however, to build robust radar systems that are reliable and relatively inexpensive. As a result, many radar systems are still in prototype stages or are not deployed to assist drivers today, because they fail to provide trustworthy information to drivers at reasonable costs.

In terms of being unreliable, many vehicle radar-warning systems are susceptible to interference from other radar systems. That is, vehicular radar systems are often unable to discriminate between signals originating from their own transmitters as compared to signals received from different radar systems. Consequently, interference from other radar systems may cause a particular vehicle's radar system to fail to detect a real object, commonly referred to as being "blinded," a condition that may lead to a catastrophic event, such as an accident. Additionally, interference from other radar systems may cause a particular vehicle's system to declare a false target.

Other problems with current vehicular radar systems often involve their inability to detect how far away a target object is from the vehicle. For example, many vehicle radar systems use continuous wave radar in which a transmitter continuously emits energy at a single frequency. Unfortunately, this type of radar provides no downrange resolution, and so the radar may not be able to ascertain how close or far a particular object is from a vehicle.

### SUMMARY

Short-range vehicular radar systems are described herein. In one implementation, an apparatus used in radar applications includes a programmable digital receiver having an adaptable interference filter that is configured to reject radar pulses received from another radar system.

In another implementation, a short-range vehicular radar system includes receive and transmission antennae, a programmable delay generator, and a programmable receiver. The programmable delay generator is configured to control transmission of pulses from the transmission antenna at randomly selected times. This prevents ambiguities associated with target objects that are at distances (d) greater than the speed of light (c) times the pulse repetition interval (pri) divided by two [d > c * pri / 2 ] away from the transmission antenna. The programmable receiver is calibrated to sample signals received by the receive antenna relative to when the pulses are emitted from the transmission antenna.

### BRIEF DESCRIPTION OF THE DRAWINGS

The detailed description is described with reference to the accompanying figures. In the figures, the left-most digit(s) of a reference number identifies the figure in which the reference number first appears. It should be noted that the figures are not necessarily drawn to scale and are for illustration purposes only.
Fig. 1 illustrates various components of an exemplary short-range vehicular radar system that can be utilized to implement the inventive techniques described herein.
Fig. 2 is a block diagram illustrating a portion of radar system in more detail.
Fig. 3 is a block diagram illustrating an exemplary implementation for the analog portion of the transmitter.
Fig. 4 is a block diagram illustrating an exemplary implementation for the analog portion of the receiver.

### DETAILED DESCRIPTION

### Exemplary Architecture Overview

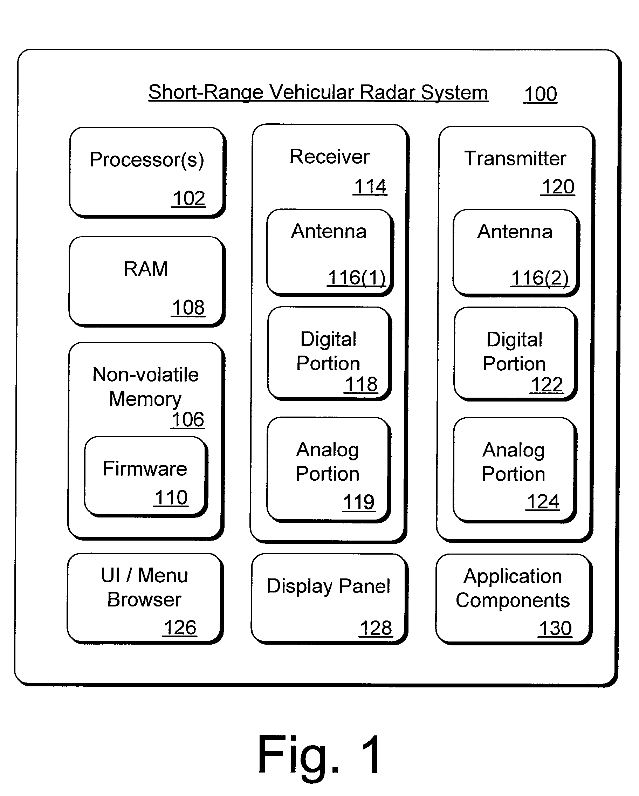

Fig. 1 illustrates various components of an exemplary short-range vehicular radar system 100 (hereinafter radar system 100) that can be utilized to implement the inventive techniques described herein. Radar system 100 may include one or more processors 102. Processor(s) 102 execute various instructions to control the operation of the radar system 100 and to potentially communicate with other devices such as components used in a motor vehicle. Processor(s) 102 may be any type of processing device such as a microprocessor, digital signal processor (DSP), programmable logic device (PLD), application specific integrated circuit (ASIC), or a combination of any of such devices.

Radar system 100 may also include a non-volatile memory 106 (such as Read-Only-Memory (ROM)), and a random access memory (RAM) 108. The memory components, i.e., non-volatile memory 106, and RAM 108, store various information and/or data such as configuration information, radar operating systems, receive or transmit data, and menu structure information. Radar system 100 may include a firmware component 110 that is implemented as a permanent memory module stored in non-volatile memory 106. Firmware 110 is programmed and tested like software, and is distributed with radar system 100 (or separately, such as in the form of an update). Firmware 110 can be implemented to coordinate operations of the hardware within radar system 100 and contains programming constructs used to perform such operations.

Although not shown, a particular radar system may also include a flash memory device as non-volatile memory 106 or in addition to non-volatile memory 106 when in the form of a read-only-memory device (ROM). Additionally, although not shown in Fig. 1, one or more system busses typically connect the various components within radar system 100 including power systems also not shown.

Radar system 100 also includes a receiver 114 and transmitter 120. Receiver 114 serves as a sensor to detect signals reflected from a target and interprets the signals with respect to a particular application for which the radar system 100 may be used. Transmitter 120 emits signals, typically at microwave frequencies, that are bounced off target objects to eventually return to the radar system 100 for receiver 114 to sense. Receiver 114 and transmitter 120 may each rely on one or more antennae 116(1) and 116(2), respectively. Antennae referred to generally as 116 are used as a conduit for receiving and/or transmitting signals. It should be recognized that antennas come in a variety of different forms, and for purposes of this discussion any of these variety of forms may be included.

Receiver 114 and transmitter 120 may also include analog portions 119 and 124, respectively. These devices include amplifiers, microwave source(s), splitters, mixers, capacitors, resistors, inductors and other analog components, used to transmit or receive signals. It should be recognized that the analog portions of receivers and transmitters come in a variety of different forms and include various different components, and for purposes of this discussion, these various different forms and different components may be included.

Receiver 114 and transmitter 120 also include programmable digital portions 118 and 122, respectively. The programmable digital portions are programmable logic and/or programmable computer-executable code, which may include firmware and/or software. The digital portions 118 and 122 are configurable to perform many different applications associated with receiving and transmitting signals in a digital format, which shall be explained in more detail below.

Although radar system 100 only shows a single receiver 114 and transmitter 120, it is envisioned that in certain implementations multiple receivers and transmitters may be utilized under the control of processor(s) 102. Additionally, various components such as antennae may be positioned at various locations on a vehicle possibly remote from other components. For example, antennae may be positioned at the rear, sides, and/or front, of a vehicle depending on the application(s) and connected to other components of radar system 100 via wired, wireless and/or optic connectors.

Radar system 100 may also include a user interface and menu browser 126, and a display panel 128. The user interface and menu browser 126 allows a user of radar system 100 to navigate the radar's menu structure. User interface 126 can include indicators or a series of buttons, switches, or other selectable controls that are manipulated by a user of radar system 100. Display panel 128 is a graphical display that provides information regarding the status of radar system 100, messages in any format, and the current options available to a user through the menu structure. Radar system 100 may include visual indicator lights that appear on a vehicle's dashboard or as part as a separate unit in visual proximity to a driver. Audio components such as speakers (not shown) may also be a part of radar system 100.

Radar system 100 may include application components 130 that provide a runtime environment in which software applications or applets can run or execute. Those skilled in the art will recognize that there are many different types of runtime environments available. A runtime environment facilitates the extensibility of radar system 100 by allowing various interfaces to be defined that, in turn, allow the application components 128 to interact with radar system 100.

It is to be appreciated that additional components can be included in radar system 100 and some components illustrated in radar system 100 above need not be included. For example, additional storage devices, Input/Output interfaces (not shown), and so forth may be included in radar system 100, or application components 130 may not be included.

Radar system 100 may be used in many different vehicular applications including, but not limited to, backup warning systems, blind-spot warning systems, lane-changing warning systems, accident (or "crash") avoidance systems, parking assistant systems, automatic distance control systems, and other related applications. As used herein, "short-range vehicular radar system" generally means any radar device having pulse detection and ranging capabilities generally operating in conjunction with a vehicle. The range of the radar is generally limited to about 100 feet (30,48 m) of a target object, but greater ranges may be possible depending on the application. Although specific examples may refer to radar systems used in vehicular applications or short-range distances, it may be possible to apply some of the techniques described herein to other radar systems that operate at greater target ranges or in conjunction with other platforms (i.e., airplanes, ships, helicopters, etc.).

### Programmable Digital Receiver and Transmitter

Receiver 114 and transmitter 120 shall now be described in more detail. Receiver 114 is configured to adaptively wait a delayed period of time after transmitter 120 emits a radio frequency (RF) pulse before sampling a return signal (i.e., RF pulse) received by antenna 116(1). This delayed period of time compensates for the amount of time it takes a return signal to propagate to the analog circuitry 119 through the receive antenna 116(1). In other words, receiver 114 is calibrated to (i) sample signals received by receive antenna 116(1) relative to when pulses are emitted by transmission antenna 116(2) to a target a certain distance away, and (ii) optimally sample the signals received by the antenna 116(1) after the signal is given just enough time to propagate through circuitry components.

Receiver 114 is also configured to reject radar signals (i.e., RF pulses) that are received from other radar systems, which helps to eliminate pulsed interference. Receiver 114 uses a programmable non-linear filter to discriminate between interfering pulses emitted by another radar system in proximity to radar system 100. Typically, the other radar system has similar characteristics as radar system 100. By using a non-linear filter approach, receiver 114 is able to eliminate pulses that appear to be statistically much larger than other pulses received by receiver 114.

Transmitter 120 is configured to transmit pulses at randomly selected times. The receiver 114, in turn, must follow these randomly selected times in order to determine when an object is present at a particular distance. This randomization serves to reduce the probability that many pulses from an interfering radar will arrive at the receiver 114 when it is attempting to detect a target at a certain distance. Additionally, temporal jitter of the pulses reduces the transmitted power spectral density by spreading the pulses across a greater bandwidth. Accordingly, radar system 100 is able to transmit the maximum amount of power as may be permitted by regulatory oversight, such as the U.S. Federal Communications Commission or other government agencies depending on the country.

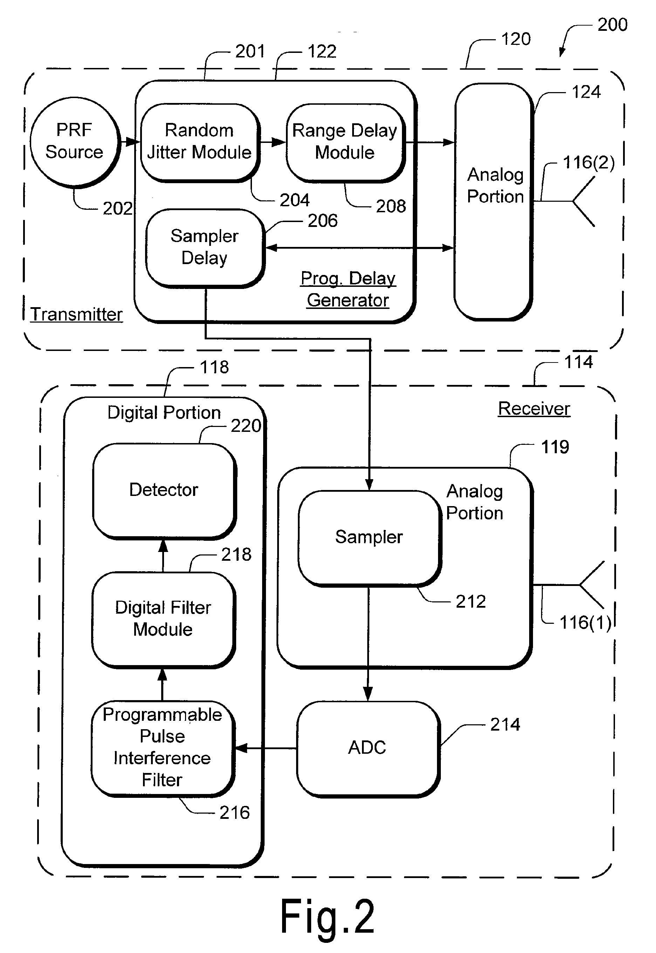

Exemplary implementations for receiver 114 and transmitter 120 shall now be described in more detail. Fig. 2 is a block diagram illustrating a portion of radar system 100 including receiver 114 and transmitter 120. Transmitter 120 includes: a pulse repetition generator (PRF) 202, a programmable delay generator 201, analog portion 124, and antenna 116(2). Programmable delay generator 201 includes a random jitter module 204, a sampler delay module 206, and a range delay module 208, all of which are implemented within the digital portion 122 of transmitter 120 as programmable logic and/or programmable computer-executable code. Accordingly, programmable delay generator 201 may be adapted to perform different applications, by simply modifying programmable parameters associated with transmitter 120.

Program delay generator 201 is configured to control transmission of pulses from antenna 116(2) at randomly selected times across a range of spectra. This prevents ambiguities associated with locating target objects that are particular distances away from antenna 116(2). In other words, program delay generator 201 is configured to prevent ambiguities associated with target objects that are at distances (d) greater than the speed of light (c) times the pulse repetition interval (pri) divided by two (e.g., [d > c * pri / 2 ]) away from the transmission antenna. In one implementation this is accomplished by using PRF 202 in conjunction with random jitter module 204, sampler delay module 206, and range delay module 208.

In particular, PRF 202 generates a certain number of pulses per second and provides a constant base signal for transmitter 120. Random jitter module 204 modifies the constant pulses produced by PRF 202 by introducing random times in which transmitter 120 emits pulses. For example, random jitter module 204 is configured to generate pulses with random interval delays, such as 250 x 10⁻⁹ seconds, 308 x 10⁻⁹ seconds, then 200.19 x 10⁻⁹ seconds, and so forth. Random jitter module 204 helps to prevent false targets associated with a constant pulse rate.

Range delay module 208 serves as a slave to random jitter module 204. Range delay module 208 introduces a programmable delay to random pulses produced by random jitter module 204 in order to set the current range for object detection.

Sampler delay module 206 monitors when pulses are emitted by transmitter 120 and calibrates the transmitter 120 and receiver 114. In particular, sampler delay module 206 provides an indication to receiver 114 when to allow signals received by antenna 116(1) to be sampled. In other words, sampler delay module 206 is coupled to receiver 114 to adaptively control when the programmable receiver 114 samples signals received by receive antenna 116(1).

In the exemplary implementation of Fig. 2, receiver 114 includes antenna 116(1) connected to analog portion 119, which is coupled to digital portion 118 via an analog-to-digital converter 214. Analog portion 119 includes sampler 212 and digital portion 118 includes a programmable pulse interference filter 216, a digital filter module 218 and a detector 220. The modules in digital portion 118 may be implemented in programmable logic and/or programmable computer-executable code.

Signals received by antenna 116(1) are precisely calibrated by range delay module 208 and sampler delay module 206. In particular, range delay module 208 and sampler delay module 206 synchronize when receiver 114 samples signals. Sampler delay module 206 also introduces a delayed period time after a pulse is emitted from transmitter 120 before activating when sampler 212 samples a signal received by receive antenna 116(1). This delayed period of time compensates for delays associated with the signal propagating from receive antenna 116(1) through analog portion 119 of receiver 114 until an precise time when the signal is optimally ready to be sampled.

Once sampler 212 captures the signal, the signal is converted from an analog value into a digital value, which is received by programmable interference filter 216. Programmable interference module uses an adaptable non-linear filter to reject received interference pulses. In the exemplary implementation, the programmable interference filter 216 is a sliding window median filter. The output of the filter is the median value of the set comprised of the most-recent digital value and a specific quantity of past digital values. Because interference pulses are often received at very high power levels compared to the desired receive signal, this filter tends to preferentially reduce the impact of interference compared to the desired signal. Digital filter module 218 may be used to perform additional filtering to reduce noise associated with pulses accepted by programmable pulse interference filter 216. This filtering is programmable to allow parameters to be changed to suit most applications. In the exemplary implementation, the digital filter module 218 is a narrowband filter used to improve the signal to noise ratio prior to detection. Digital filter module 218 may be dynamically modified to selectively enhance system sensitivity at a particular range by modifying the filter bandwidth at that range. This increases the sensitivity at one range cell to prevent a loss of detection of an important object. Based on filtering performed by modules 216 and 218, detector 220 is able to accurately detect target objects in view of radar system 100.

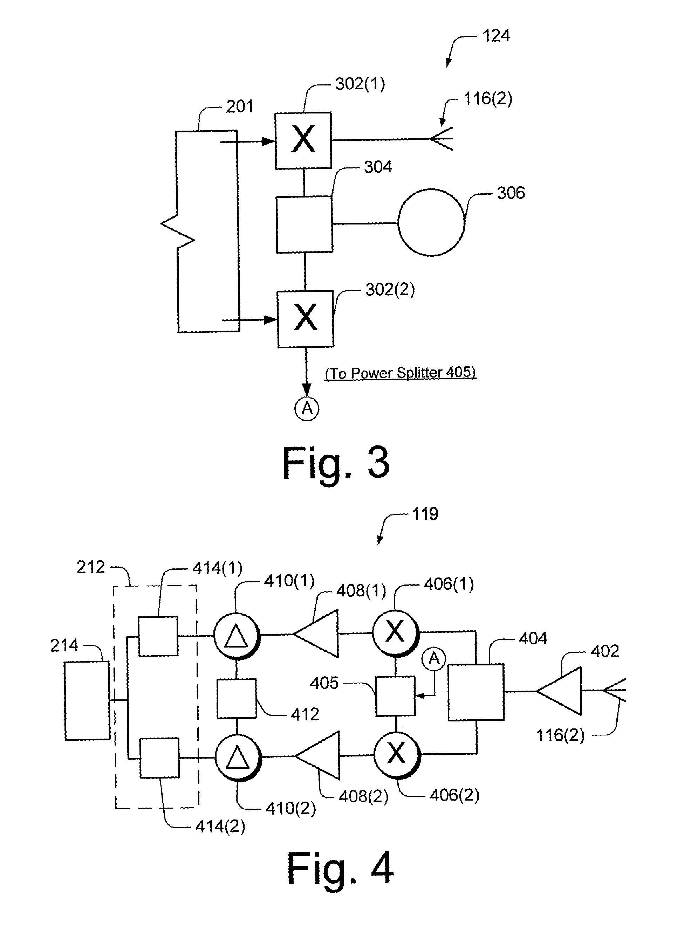

Fig. 3 is a block diagram illustrating an exemplary implementation for analog portion 124 of transmitter 120. In this exemplary implementation, analog portion 124 includes pulse modulators 302(1) and 302(2) coupled to programmable delay generator 201. A power splitter 304 is employed between pulse modulators 302(1) and 302(2). Additionally, a microwave source 306 is coupled to power splitter 304. It is appreciated that analog circuitry used in a transmitter come in a variety of different forms, and for purposes of this discussion many of these variety of forms may be included.

Fig. 4 is a block diagram illustrating an exemplary implementation for analog portion 119 of receiver 114. In this exemplary implementation, analog portion 119 includes a preamplifier 402 coupled to a power splitter 404. Mixers 406(1) and 406(2) are connected to programmable gain amplifiers 408(1) and 408(2). Interposed between mixers 406 is a power splitter 405 connected to pulse modulator 302(2) shown in Fig. 3. Subtractors 410(1) and 410(2) are coupled to programmable gain amplifiers 408(1) and 408(2). Subtractors referred to generally as 410 have a programmable offset 412 interposed between them. Two sample and hold buffers 414(1) and 414(2) are coupled to subtractors 410. Sample and hold buffers 414(1) and 414(2) form sampler 212, shown in Fig. 2. It is appreciated that analog circuitry used in a receiver may come in a variety of different forms, and for purposes of this discussion many of these variety of forms may be included.

Although some implementations of the various methods and arrangements of the present invention have been illustrated in the accompanying Drawings and described in the foregoing Detailed Description, it will be understood that the invention is not limited to the exemplary aspects disclosed, but is capable of numerous rearrangements, modifications and substitutions without departing from the spirit of the invention as set forth and defined by the following claims.

## Claims

1. A short-range vehicular radar system comprising: a programmable digital receiver (114) having an adaptable interference filter (216, 218) configured to reject radar pulses received from another radar system.

2. The short-range vehicular radar system as recited in Claim 1, wherein the adaptable interference filter (216, 218) comprises an adaptable non-linear filter module implemented as a sliding window median filter.

3. The short-range vehicular radar system as recited in Claim 1 or 2, wherein the adaptable interference filter (216, 218) is a non-linear filter module in which radar pulses received by the radar system are digitized and statistically compared to the median value of a sliding time period.

4. The short-range vehicular radar system as recited in any one of the Claims 1 to 3, wherein the programmable digital receiver is within about 100 feet (30,48 m) of a target object.

5. The short-range vehicular radar system as recited in any one of the Claims 1 to 4, wherein the short-range vehicular radar system is used in vehicular applications including at least one of the following applications: crash avoidance systems, stop and go systems, backup warning systems, blind-spot warning systems, and parking assistant systems.

6. An apparatus, comprising:
a sampler (212) configured to capture digitized individual radar return pulses; and
a programmable digital receiver (114) having an adaptable interference filter (216, 218) configured to reject radar pulses received from another radar system, the adaptable interference filter (216, 218) comprising an adaptable non-linear filter module configured to output the median valued radar pulse.

7. The apparatus as recited in Claim 6, wherein the apparatus is a short-range vehicular radar used in vehicular applications in which a target object is within about 100 feet (30,48 m) of the programmable digital receiver.

8. A short-range vehicular radar system, comprising:
a transmission antenna (116(2)); and
a programmable delay generator (201) configured to control transmission of pulses from the transmission antenna (116(2)) at randomly selected times to prevent ambiguities associated with target objects that are distances away from the transmission antenna (166(2)) that are greater than the speed of light times the pulse repetition rate divided by two.

9. The short-range vehicular radar system as recited in Claim 8, wherein the programmable delay generator (201) includes a programmable random jitter generator module (204), configured to generate a random time in which a pulse is emitted from the transmission antenna (116(2)).

10. The short-range vehicular radar system as recited in Claim 8, wherein the programmable delay generator includes a programmable random jitter generator module (204), configured to generate a random time in which a pulse is emitted from the transmission antenna; and
a programmable range delay module (208) coupled to the programmable random jitter generator module (204), configured to introduce a programmable delay period to the random time in which a pulse is emitted from the transmission antenna (116(2)).

11. The short-range vehicular radar system as recited in any one of the Claims 8 to 10, further comprising:
a receive antenna (116(1)); and
a programmable receiver (114) configured to adaptively wait a delayed period of time after the pulse is emitted from the transmission antenna (116(2)) before sampling a signal received by the receive antenna (116(1)).

12. The short-range vehicular radar system as recited in any one of the Claims 8 to 10, further comprising a receive antenna (116(1)); and a programmable receiver (114) configured to monitor when the programmable range delay module (208) generates the random time in which the pulse is emitted from the transmission antenna (116(2)) and based on the random time adaptively wait a delayed period of time after the pulse is emitted from the transmission antenna (116(2)) before sampling a signal received by the receive antenna (116(1)).

13. The short-range vehicular radar system as recited in any one of the Claims 8 to 10, further comprising:
a receive antenna (116(1));
receiver circuitry; and
a programmable receiver (114) configured to adaptively wait a delayed period of time after the pulse is emitted from the transmission antenna (116(2)) before sampling a signal received by the receive antenna (116(1)); wherein the delayed period of time compensates for delays associated with the signal propagating from the receive antenna (116(1)) through the receiver circuitry until a time when the signal is ready to be sampled.

14. The short-range vehicular radar system as recited in any one of the Claims 8 to 13, wherein the short-range vehicular radar system is used in vehicular applications including at least one of the following applications: crash avoidance systems, backup warning systems, blind-spot warning systems, and parking assistant systems.

15. The short-range vehicular radar system as recited in any one of the Claims 8 to 14, wherein the transmit antenna is configured to operate within a maximum target range of about 100 feet (30,48 m) from a target object.

16. A short-range vehicular radar system, comprising:
a transmission antenna (116(2));
a programmable delay generator (201) configured to control transmission of pulses from the transmission antenna (116(2)) at randomly selected times to prevent ambiguities associated with target objects that are distances away from the transmission antenna (116(2)) that are greater than the speed of light times the pulse repetition rate divided by two;
a receive antenna (116(1)); and
a programmable receiver (114) calibrated to sample signals received by the receive antenna (116(1)) relative to when the pulses are emitted from the transmission antenna (116(2)).

17. The short-range vehicular radar system as recited in Claim 16, wherein the programmable delay generator (201) includes a random jitter module (204) configured to generate random times when to generate the pulses.

18. The short-range vehicular radar system as recited in Claim 16 or 17, wherein the programmable delay generator (201) includes a sampler delay module (206) coupled to the programmable receiver (114), configured to adaptively control when the programmable receiver (114) samples the signals received by the receive antenna (116(1)).
